# EUROPEAN PATENT APPLICATION

(11) **EP 4 520 558 A1**
(43) Date of publication of application: **12.03.2025**
(21) Application number: 23196012.1
(22) Date of filing: 07.09.2023
(51) Int. Cl.: B60H 1/00

(54) **DUCTING ARRANGEMENT OF AN HVAC SYSTEM FOR A VEHICLE**

(71) Applicant: Polestar Performance AB, 405 31 Gothenburg (SE)
(72) Inventor: PRUCE, Matt, St Albans, AL1 5PD (GB); WHITFORD, Andy, Bilton, CV22 7EN (GB); LLOYD, Rob, Leicestershire, LE11 3PU (GB); TREWAVAS, Oliver, Faringdon, SN7 7QA (GB)
(74) Representative: Zacco Sweden AB

(57) **Abstract**

A heating, ventilation, and air conditioning, HVAC, ducting arrangement (1) for a vehicle, comprising a duct pipe (2) arranged to connect to a HVAC system of said vehicle and a body structure element (10) arranged to be attached to said vehicle, wherein the body structure element (10) comprises a plurality of surfaces (11) that at an installed state of said HVAC ducting arrangement (1), define a sealed chamber, at least an inlet opening in fluidic communication with said sealed chamber, and at least an outlet opening (12b), the inlet opening is arranged to connect to an end portion (2b) of said duct pipe (2) to allow said sealed chamber to receive air from said HVAC system and the outlet opening (12b) is arranged to output air from said sealed chamber to a cabin of said vehicle.

## Description

### TECHNICAL FIELD

The present disclosure relates to a heating, ventilation and air conditioning ducting arrangement for a vehicle and a vehicle comprising such a ducting arrangement.

### BACKGROUND

Heating, ventilation and air conditioning (HVAC) systems in a vehicle regulate the temperature and climate inside the cabin. It provides both heating and cooling functionalities to ensure passenger comfort. Additionally, it controls the airflow and ventilation, allowing fresh air to circulate.

The HVAC system distributes the air to the cabin by utilizing ducting arrangements. Ducting arrangements comprise channels, typically made of a rigid material, arranged to transport the conditioned air from the HVAC system to the vehicle cabin.

Generally, ducting arrangements have been arranged in vehicles to efficiently direct the conditioned air to various parts of the vehicle. However, a drawback of the ducting arrangements of the present art is that they occupy a lot of space in the vehicle, space that can be utilized for other components/parts of the vehicle. Specifically, in an electric vehicle, the more space that can be liberated can be used for e.g., stacking additional battery cells to enhance the range of the electric vehicle. Accordingly, even though current ducting arrangements work well in some situations. The ducting arrangements of the present art are too bulky.

Thus, the ducting arrangements of the present art fail to fulfil requirements of being compact. Hence, there is room for ducting arrangements for vehicles in the present art to explore the domain of providing a ducting arrangement that is improved in terms of compactness. Accordingly, it would be desirable to provide a ducting arrangement for a vehicle that address requirements related to improving a compactness thereof.

### SUMMARY

It is therefore an object of the present disclosure to alleviate at least some of the mentioned drawbacks to provide an improved ducting arrangement that is more compact compared to conventional vehicle ducting arrangement, and a vehicle comprising such a ducting arrangement.

This and other objects, which will become apparent in the following, are achieved by ducting arrangement and a vehicle as defined in the appended claims. The present disclosure is at least partly based on the insight that a ducting arrangement comprising a body structure element of a vehicle will improve the ducting arrangement in compactness while functioning in accordance with requirements.

The present disclosure relates to a heating, ventilation, and air conditioning (HVAC) ducting arrangement for a vehicle comprising a duct pipe having a first end portion and an opposing second end portion. The first end portion is arranged to connect to a HVAC system of said vehicle. Further, comprising a body structure element arranged to be attached to said vehicle. The body structure element may be a component part of the vehicle arranged to provide structural rigidity to the vehicle or any other structural component of the vehicle body/chassis. The body structure element comprises a plurality of surfaces that, at an installed state of said HVAC ducting arrangement, define a sealed chamber. The body structure element comprises at least an inlet opening in fluidic communication with said sealed chamber, and at least an outlet opening arranged to be in fluidic communication with a vehicle cabin. The inlet opening is arranged to connect to said second end portion of said duct pipe to allow said sealed chamber to receive air from said HVAC system. It should be noted that the second end portion may be branched into a plurality of branches, each branch being arranged to connect to a corresponding inlet opening of said sealed chamber. The air may be conditioned air. In other words, the air may have been adjusted in one of temperature, humidity and cleanliness by the HVAC system. The outlet opening is arranged to output air from said sealed chamber to a cabin of said vehicle.

An advantage of the ducting arrangement is that it enables conditioned air to be outputted from a tight space in the vehicle, such as below a passenger seat. Because the body structure element is part of the vehicle and the chamber (which outputs air from the duct pipe) is within said body structure element, the overall space utilized by the ducting arrangement in the vehicle is reduced i.e., the material used for the duct pipe (e.g. polymer) can be reduced since the body structure element is used to outlet conditioned air. In other words, in specific spaces in the vehicle cabin there is no room to place a duct pipe. The disclosure alleviates this by utilizing body structure elements instead of duct pipes.

The sealed chamber/body structure element may be dimensioned to form a pressurized chamber having a greater air pressure relative said cabin. In other words, based on a defined flow (which may be a range) of conditioned air, the sealed chamber may be dimensioned to form a pressurized chamber. Accordingly, the chamber may be dimensioned so that the pressure therein is greater than the pressure in the vehicle cabin during an active state of said HVAC system in which the HVAC system supplies a flow of conditioned air to said sealed chamber.

Thereby there will be an airflow from the outlet opening into the cabin. In other words, the chamber is dimensioned to, during an active state of said HVAC system, have a greater pressure therein relative a pressure in a cabin of the vehicle.

The chamber/body structure element may be dimensioned to form said pressurized chamber by having a specific/pre-defined inlet/outlet opening amount and/ or a specific inlet/outlet opening area/size and/or a specific chamber volume to provide said pressurized chamber. Accordingly, the body structure element may comprise a plurality of inlet openings and/or a plurality of outlet openings. The body structure element may be formed by metal, thereby providing structural rigidity to the vehicle. The body structure element may in some aspects herein be formed as a one-piece structure.

Advantageously, the air can travel a relatively large distance from the HVAC to the sealed chamber such that a positive pressure develops within the chamber having a higher absolute pressure than the cabin. The pressure within the chamber prevents the air flow from dispersing and loosing velocity as it would do if it entered a low pressure area, instead the flow rate and direction of the flow is maintained across the chamber until it reaches the outlet of the chamber. In other words, exit velocity and inlet velocity may be maintained. Accordingly, the air flow velocity in the duct can be outputted with the same velocity into the cabin.

The body structure element may be a vehicle cross-member, a vehicle pillar (e.g. A, B or C pillar) or any other body structure element of said vehicle. Accordingly, the body structure element may be a structural element of the vehicle arranged to provide structural rigidity to said vehicle. In other words, the body structure element may be a structural element of the vehicle, preferably formed in a metal or an alloy.

The body structure element may be oblong having a length, the body structure element may comprise least one wall delimiting the volume of the sealed chamber along said length. The length of the body structure element may extend vertically relative the vehicle or along the width of the vehicle.

An interior of said plurality of surfaces of said body structure element may comprise a support structure enclosed by said plurality of surfaces, said support structure defining said (dimensions of the) sealed chamber. The support structure may be e.g., bonded to the body structure element. The support structure may be extruded metal or steel.

An advantage of providing a support structure attached to the interior of the body structure element is that it provides a manufacturing convenient way of defining said sealed chamber within the body structure element.

The at least one inlet opening may form an accumulated inlet area of 1250-1850 mm², wherein the at least one outlet opening may form an accumulated outlet area of 1250-1850 mm². In some aspects, there is a plurality of inlet openings and/or a plurality of outlet openings forming said accumulated inlet/outlet areas. The arrangement may have a plurality a common amount of inlets and outlets. Preferably, each outlet is coaxial with a corresponding inlet. Moreover, even though the arrangement may comprise a plurality of inlets and outlets the chamber may be a common chamber defining a common space for all inlets/outlets. However, in some aspects, the sealed chamber may form independent/divided channels connecting each inlet opening to a corresponding outlet opening.

Further, a volume of said sealed chamber may be 500 000-700 000 mm³, preferably, 525 000-625 000 mm³.

The duct pipe may be configured to output, during an active state of said HVAC system, from said second end portion, (conditioned) air having a velocity of 5-20 m/s, preferably 7.5-14 m/s.

The plurality of surfaces may comprise a first side surface and an opposing second side surface, the at least one inlet opening extending through said first side surface and said at least one outlet opening extending through said second side surface, the sealed chamber being intermediate said first and second side surfaces. The side surfaces allow for conditioned air to be outputted horizontally (i.e. along the direction of the vehicle surface). As a note, the surfaces may also comprise a top surface adjoining the side surfaces, a bottom surface, and a pair of walls/sealing baffles restricting the width of the chamber. The pair of walls may therefore jointly define the length of the sealed chamber.

The present disclosure further provides a vehicle comprising the HVAC ducting arrangement according to any aspect herein.

Accordingly, the body structure element may be a vehicle cross member, extending over a floor portion of said vehicle along a width of said vehicle. Further, preferably the outlet opening may comprise an axial extension substantially parallel with said floor portion of said vehicle. Preferably, the cross member is positioned below/under a vehicle passenger seat allowing air to be outputted to the cabin from below the seat. An advantage of this is that the ducting can be hidden while still providing conditioned air to the cabin.

In some aspects, the vehicle comprises a pair of ducting arrangements. The pair may be extending along a partial width of the vehicle along a common axis such that one of the pair provides conditioned air to one side portion of the vehicle cabin (e.g. a left side of a back-passenger side of the vehicle) and the other of the pair provides conditioned air to another side portion of the vehicle cabin (e.g. a right side of a back passenger side of the vehicle). The pair may be connected to a common HVAC system. The arrangement may be attached to said floor portion by fastening elements, adhesive or welding. It should be noted that in other aspects herein the body structure element may be e.g. a vehicle pillar.

The plurality of surfaces comprises a first side surface, an opposing second side surface and a top surface connected to upper edges of said first and second side surface. The top surface is substantially parallel with a floor portion of said vehicle. At said installed state, said sealed chamber is defined by at least said first and second side surface, said top surface and a bottom surface connected to lower edges of said first and second side surface. Preferably, the bottom surface is a part of said floor portion of said vehicle. The sealed chamber may further comprise walls/sealing baffles delimiting the chamber in length. The sealing baffles may be formed by foam elements/pieces.

The HVAC system of the vehicle as referred to herein may comprise components such as a compressor, a condenser, an evaporator, a dryer, valves, a fan, a blower, channels that carry a medium affected by said components and any other suitable device/unit that allow the HVAC system to transfer conditioned air through the duct pipe into the sealed chamber so that it can be outputted into the cabin of the vehicle. It should be noted that the HVAC system may be configured in a variety of manners and is not limited by the components disclosed herein.

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present disclosure will now be further clarified and described in more detail, with reference to the appended drawings;
- Figure 1: illustrates a side cross-sectional view A-A of a part of a HVAC ducting arrangement of Figure 2 in accordance with some aspects of the present disclosure;
- Figure 2: illustrates an objective view of a pair of HVAC ducting arrangements in accordance with some aspects of the present disclosure;
- Figure 3A: illustrates a front objective view of a HVAC ducting arrangement in accordance with some aspects of the present disclosure;
- Figure 3B: illustrates a back objective view of a HVAC ducting arrangement in accordance with some aspects of the present disclosure;
- Figure 4: illustrates a schematic side view of a vehicle in accordance with some aspects of the present disclosure;
- Figure 5: illustrates an objective view of a vehicle comprising a HVAC ducting arrangement in accordance with some aspects of the present disclosure; and
- Figure 6: illustrates an top view of a vehicle comprising a HVAC ducting arrangement in accordance with some aspects of the present disclosure;

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

Expressions denoted as "the first", "the second", etc herein may be interchanged with other denotations within the scope of the present disclosure e.g. "the main", "the secondary" etc.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "duct pipe" may refer to a conduct/channel arranged to transfer a flow of conditioned air and may be formed by plastic. E.g. polyethene.

The term "sealed chamber" may refer to an enclosed space in which, except from inlets and outlets communicating with said sealed chamber, no air can enter to, or escape from. In some aspects, the sealed chamber may be referred to as a "pressurized cavity" or "pressurized chamber".

The term "fluidic communication" may refer to that a fluid, e.g. conditioned air is allowed to be transferred between the units/spaces having fluidic communication.

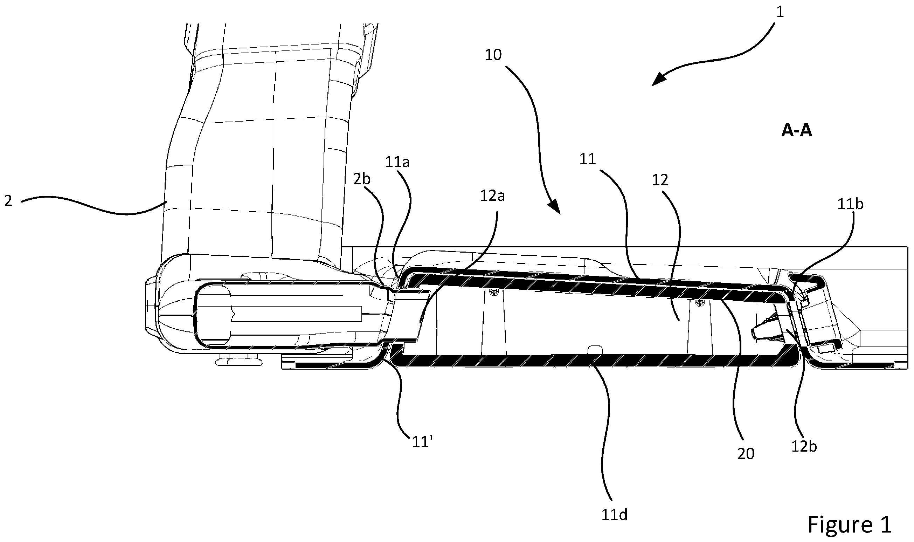

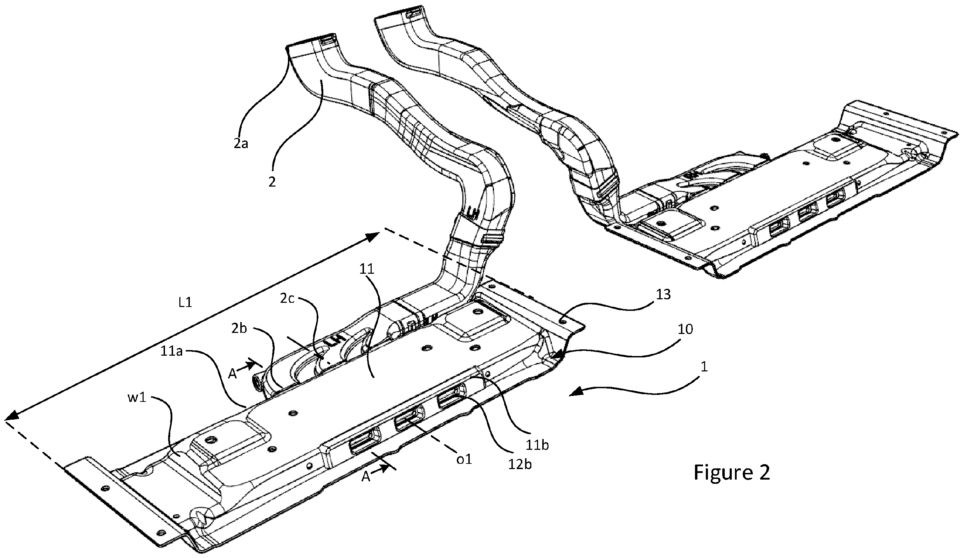

Figure 1 illustrates a side cross-sectional view of a part of a heating, ventilation, and air conditioning (HVAC) ducting arrangement 1 for a vehicle. The HVAC ducting arrangement 1 comprising a duct pipe 2 having a first end portion 2a (not illustrated in Figure 1, illustrated in Figure 2) and an opposing second end portion 2b. The first end portion 2a is arranged to connect to a HVAC system 100 (not shown in Figure 1) of said vehicle. Further, the HVAC ducting arrangement 1 comprises a body structure element 10 arranged to be attached to said vehicle, the body structure element 10 comprises a plurality of surfaces 11, wherein the plurality of surfaces 11, at least an installed state of said HVAC ducting arrangement 1, define a sealed chamber 12. The expression "Installed state" refers to when said body structure element 10 is attached to a vehicle. The body structure element 10 in Figure 1 is a cross-member arranged provide structural rigidity to a vehicle the cross member being arranged to extend along the width of the vehicle on top of a floor portion thereof, preferably associated with/under a vehicle passenger seat such that the body structure element 10 is intermediate a vehicle passenger seat and a floor portion of the vehicle.

Figure 1 further illustrates that the body structure element 10 comprises at least an inlet opening 12a in fluidic communication with said sealed chamber 12, and at least an outlet opening 12b. The inlet opening 12a is arranged to connect to said second end portion 2b of said duct pipe 2 to allow said sealed chamber 12 to receive air from said HVAC system 100. The outlet opening 12b is arranged to output air from said sealed chamber 12 to a cabin of said vehicle . Accordingly, air may be transferred from said HVAC system through the duct pipe 2 into the sealed chamber 12 and out from said outlet opening 12b.

The sealed chamber 12 may be dimensioned to, at least during an active state of said HVAC system 100, form a pressurized chamber 12 having a greater air pressure relative said cabin. For example, the chamber may when said HVAC system is active providing an airflow through said duct, have an air pressure above atmospheric pressure, whereas the vehicle cabin have an atmospheric air pressure. This allow the air to be outputted with a flow into the vehicle cabin thereby distributing air efficiently.

Figure 2 illustrates an objective view of a pair of HVAC ducting arrangements 1 in accordance with aspects of the present disclosure. As illustrated in Figure 2, Figure 1 is a cross-section A-A of Figure 2.

In Figure 2, the body structure element 10 is a vehicle cross-member arranged to be attached to a vehicle floor portion. Figure 2 further illustrates that the cross-member may comprise fastening openings 13 for attaching the element 10 to a vehicle floor portion. It should be noted that the body structure element may also be a vehicle pillar or any other body structure element of said vehicle.

Figure 2 further illustrates that the body structure element 10 may comprise a plurality of outlet openings 12b. Figure 2 further illustrates that the duct pipe 2 is branched at an end portion thereof into a plurality of pipe branches 2c, each pipe branch 2c connecting to a corresponding inlet opening 12a (not shown, see Figure 1) in said body structure element 10. Accordingly, the element 10 may comprise a plurality of inlet openings 12a and a plurality of outlet openings 12b. Preferably, each inlet opening 12a is coaxial with a corresponding outlet opening 12b. Such that each outlet opening 12b have a common extension axis o1 with a corresponding inlet opening 12a.

As further illustrated in Figure 2, the body structure element 10 may be formed by at least one extruded piece of metal such as aluminium.

Figure 2 further illustrates that the body structure element 10 is oblong having a length L1, the body structure element 10 comprising least one (or a pair) wall w1 delimiting the volume of the sealed chamber along said length L1. Accordingly, the length of the body structure element 10 is not necessarily the same as the length of the sealed chamber. Further, Figure 2 illustrates that the plurality of surfaces 11 comprises a first side surface and an opposing second side surface 11a, 11b, the at least one inlet opening 12a extending through said first side surface 11a and said at least one outlet opening 12b extending through said second side surface 11b, the sealed chamber 12 being intermediate said first and second side surfaces 11a, 11b.

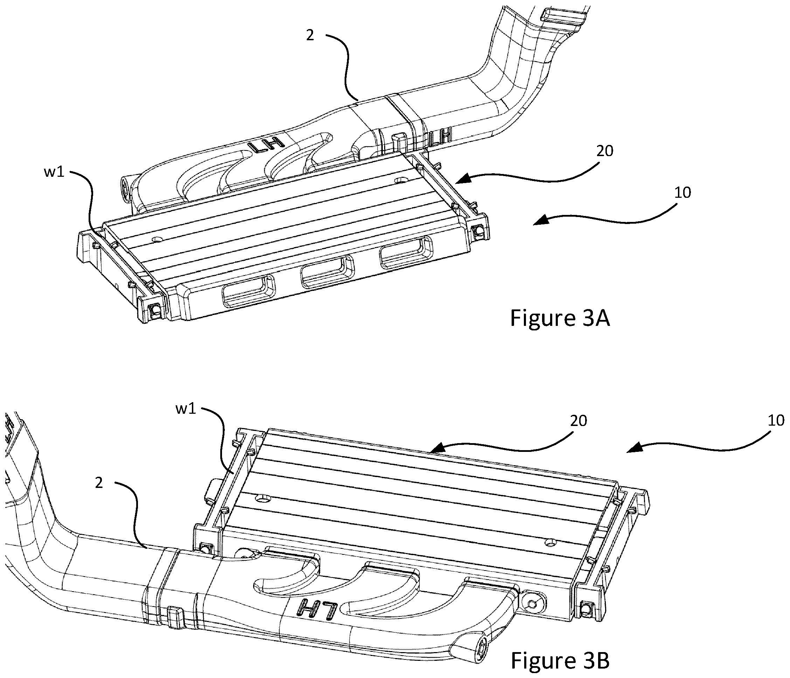

Figure 3A illustrates a part of a body structure element 10 from an objective front view. Figure 3B illustrates a part of said body structure element 10 from an objective back view. Specifically, a support structure 20 of said body structure element is illustrated in Figures 3A-3B. The support structure 20 (and the body structure element) may be formed by extruded metal. The support structure 20 is part of said body structure element 10 and may be bonded/attached/integral to an interior surface 11' of said body structure element 10 as illustrated in Figure 1 (i.e. the term "surfaces" may also encompass surfaces of the support structure). Hence, the support structure 20 may be part of the body structure element 10 to provide additional rigidity thereto. The expression support structure may be interchanged with "body structure insert" or "body structure stiffening element". As illustrated in Figure 3, the support structure 10 may define said sealed chamber. Accordingly, a pair of walls/sealing baffles w1 may delimit the volume of the sealed chamber along the length L1 of the body structure element 10. The walls w1 may be formed by any sealing material such as a foam. It should be noted that the body structure element 10 may be formed without any support structure 20. The support structure 20 is further also illustrated in Figure 1.

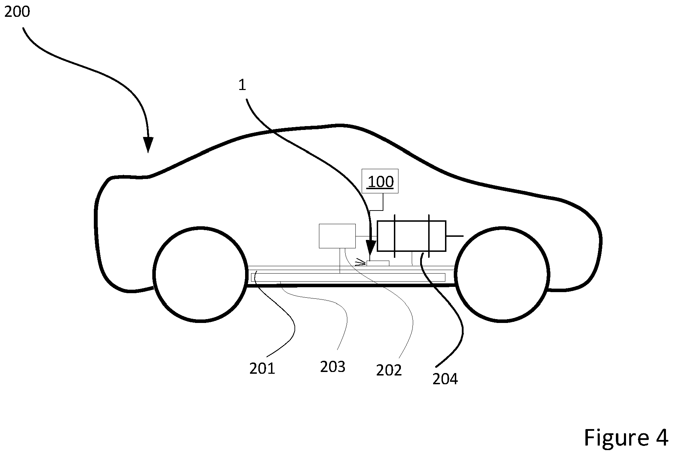

Figure 4 schematically illustrates a vehicle 200 in accordance with aspects herein, the vehicle 200 comprising the HVAC ducting arrangement 1 according to any aspect herein. The vehicle 200 may further comprise an electric motor 204. The electric vehicle 200 may comprises a battery module 203, an inverter, a number of other electrical components including an electrical current transmission system, safety system, battery management system, current management system, and a battery busbar interconnecting the various components. Further, the electric vehicle 200 may comprise an electronic control unit (ECU) 202 in order to control the electric motor 204 or HVAC system 100. The ECU 202 or components thereof can comprise or include various modules, each of which is constructed, programmed, configured, or otherwise adapted to autonomously carry out a function or set of functions. As further illustrated schematically in Figure 4, the vehicle 200 comprises a HVAC system 100. Also, it is illustrated that the HVAC ducting arrangement may be attached to a floor portion 201 of the electric vehicle 200 such that the HVAC ducting arrangement is intermediate the floor portion 201 and a battery module of said electric vehicle 200.

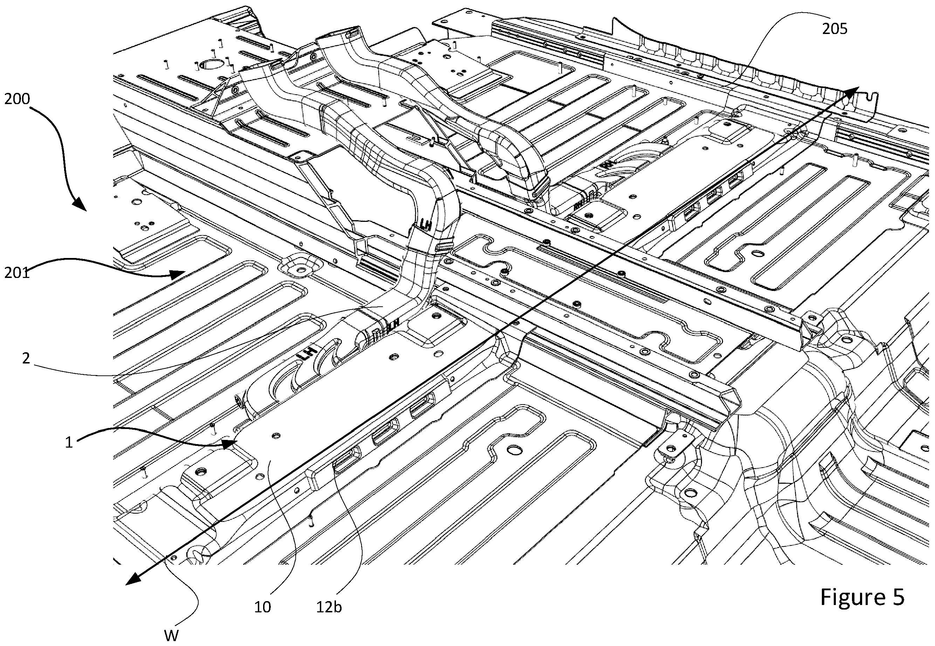

Figure 5 illustrates an objective top view of a part of said vehicle 200 which is schematically illustrated in Figure 4. Figure 5 illustrates that the body structure 10 may be a vehicle cross member, extending over a floor portion 201 of said vehicle along a width W of said vehicle 200. Each outlet opening 12b may comprises an axial extension substantially parallel with said floor portion 201 of said vehicle. Figure 5 illustrates the compactness provided by the duct arrangement 1 of the present disclosure as the duct pipe 2 is connected to the chamber defined in the body structure element 10 allowing the body structure element 10 to output the air received from the duct pipe 2 from outlet openings 12b thereof. Accordingly, the duct arrangement 1 may be positioned at a vehicle passenger seat receiving portion of said floor portion 201. Thereby a passenger seat may be placed on top of, or, be attached to said body structure element 10.

Figure 5 further illustrates that the floor portion 201 comprises longitudinal beams 205 such that the body structure element 10 may be connected between the longitudinal beams 205. The longitudinal beams 205 extending perpendicular to said width W of said vehicle 200. The body structure element 10 may be attached to said floor portion 201 by fastening elements, adhesive or welding.

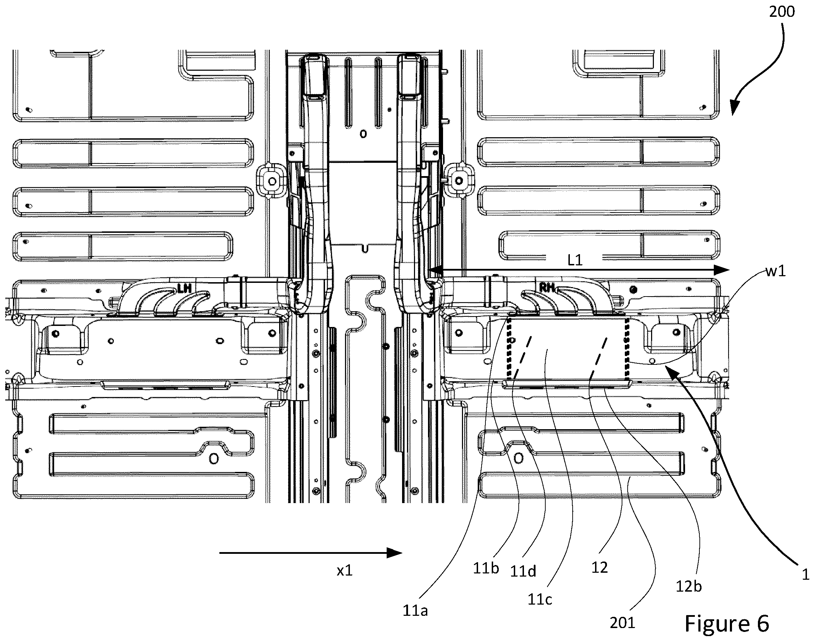

Figure 6 illustrates a top view of a part of a vehicle 200 having the duct arrangement 1 according to some aspects herein attached thereto. Figure 6 illustrates that the plurality of surfaces comprises a first side surface 11a, an opposing second side surface 11b and a top surface 11c connected to upper edges of said first and second side surface 11a, 11b. The top surface 11c being substantially parallel with a floor portion 201 of said vehicle. At said installed state as illustrated in Figure 6 the sealed chamber is defined by at least said first and second side surface 11a, 11b, said top surface 11c and a parallel bottom surface 11d connected to lower edges of said first and second side surface 11a, 11b. As illustrated in Figure 6, the bottom surface 11d may be at least a part of said floor portion 201 of said vehicle 200. In other words, the body structure element may comprise five surfaces (pair of walls w1, sides 11a, 11b and top 11c) which, when accompanied, at an installed state, by said floor portion 201, define said sealed chamber 12. The bottom surface 11d in Figure 6 is denoted by a dashed line.

As further illustrated in Figure 6, the sealed chamber 12 may be further defined by a pair of opposing walls/sealing baffles w1 delimiting the length L1 of the body structure element 10 in a first direction x1. In other words, a length of the sealing chamber in said first direction x1 may be a partial length L1 of the body structure element 10 in said first direction x1 or correspond to the length L1 of the body structure element 10 in said first direction x1. In other words, one or two foam pieces or any other sealing element may be inserted into the body structure element 10 to restrict a length of the sealed chamber 12 defined within said body structure element 10 (i.e. the sealing elements may form one of said surfaces that define the sealed chamber). This may be performed for example to limit the volume of the sealed chamber 12 to allow the sealed chamber to be pressurized upon receiving conditioned air from the duct 2.

In accordance with some aspects of the present disclosure in which for simulations have been performed, the HVAC ducting arrangement 1 herein as illustrated in Figure 6 enable an efficient air flow from the HVAC system 100 to the vehicle cabin by that the at least one inlet opening (e.g. as seen in Figure 1) form an accumulated inlet area of 1250-1850 mm², wherein the at least one outlet opening 12b form an accumulated outlet area of 1250-1850 mm². Preferably, the at least one inlet opening 12a is three inlet openings and the at least one outlet opening is three outlet openings.

Further, the accumulated inlet area may be combined with a volume of said sealed chamber 12 being 500 000-700 000 mm³, preferably, 525 000-625 000 mm³.

Further, the duct pipe 2 may be configured to output air into the chamber 12 having a velocity of 5-20 m/s, preferably 7.5-14 m/s. This may be performed by adjusting e.g. a fan of the HVAC system to force air into the duct 2 having said velocity.

Accordingly, the accumulated inlet area herein, the velocity and the sealed chamber volume may be combined to provide an efficient flow of air from the HVAC system to the cabin. Nevertheless, the aforementioned parameters may be adjusted and are not limiting to the scope of the present disclosure.

## Claims

1. A heating, ventilation, and air conditioning, HVAC, ducting arrangement (1) for a vehicle comprising:
- a duct pipe (2) having a first end portion (2a) and an opposing second end portion (2b), wherein the first end portion (2a) is arranged to connect to a HVAC system (100) of said vehicle;
- a body structure element (10) arranged to be attached to said vehicle,
wherein the body structure element (10) comprises a plurality of surfaces (11), wherein the plurality of surfaces (11), at least at an installed state of said HVAC ducting arrangement (1), define a sealed chamber (12),
wherein the body structure element (10) comprises at least an inlet opening (12a) in fluidic communication with said sealed chamber (12), and at least an outlet opening (12b),
wherein the inlet opening (12a) is arranged to connect to said second end portion (2b) of said duct pipe (2) to allow said sealed chamber (12) to receive air from said HVAC system (100),
wherein the outlet opening (12b) is arranged to output air from said sealed chamber (12) to a cabin of said vehicle.

2. The HVAC ducting arrangement (1) according to claim 1, wherein said sealed chamber (12) is dimensioned to, at least during an active state of said HVAC system (100), form a pressurized chamber having a greater air pressure relative said cabin.

3. The HVAC ducting arrangement (1) according to any one of the claims 1 or 2, wherein said body structure element (10) comprises a plurality of inlet openings (12a) and/or a plurality of outlet openings (12b).

4. The HVAC ducting arrangement (1) according to any one of the preceding claims, wherein said body structure element (10) comprises metal.

5. The HVAC ducting arrangement (1) according to any one of the preceding claims, wherein said body structure element (10) is a vehicle cross-member, a vehicle pillar or any other body structure element of said vehicle.

6. The HVAC ducting arrangement (1) according to any one of the preceding claims, wherein said body structure element (10) is oblong having a length (L1), the body structure element (10) comprising least one wall (w1) delimiting the volume of the sealed chamber along said length (L1).

7. The HVAC ducting arrangement (1) according to any one of the preceding claims, wherein an interior (11') of said plurality of surfaces (11) of said body structure element (10) comprises a support structure (20) enclosed by said plurality of surfaces (11), said support structure (20) defining said sealed chamber (12).

8. The HVAC ducting arrangement (1) according to any one of the preceding claims, wherein the at least one inlet (12a) opening form an accumulated inlet area of 1250-1850 mm², wherein the at least one outlet opening (12b) form an accumulated outlet area of 1250-1850 mm².

9. The HVAC ducting arrangement (1) according to any one of the preceding claims, wherein a volume of said sealed chamber is 500 000-700 000 mm³, preferably, 525 000-625 000 mm³.

10. The HVAC ducting arrangement (1) according to any one of the preceding claims, wherein said duct pipe (2) is configured to output, from said second end portion (2b), air having a velocity of 5-20 m/s, preferably 7.5-14 m/s.

11. The HVAC ducting arrangement (1) according to any one of the preceding claims, wherein said plurality of surfaces (11) comprises a first side surface and an opposing second side surface (11a, 11b), the at least one inlet opening (12a) extending through said first side surface (11a) and said at least one outlet opening (12b) extending through said second side surface (11b), the sealed chamber (12) being intermediate said first and second side surfaces (11a, 11b).

12. A vehicle (200) comprising the HVAC ducting arrangement (1) according to any one of the preceding claims.

13. The vehicle (200) according to claim 12, wherein said body structure element (10) is a vehicle cross member, extending over a floor portion (201) of said vehicle along a width (W) of said vehicle, wherein said at least one outlet opening (12b) comprises an axial extension substantially parallel with said floor portion (201) of said vehicle.

14. The vehicle (200) according to claim 13, wherein said body structure element (10) is attached to said floor portion (201) by fastening elements, adhesive or welding.

15. The vehicle (200) according to any one of the claims 14 or 15, wherein said plurality of surfaces comprises a first side surface (11a), an opposing second side surface (11b) and a top surface (11c) connected to upper edges of said first and second side surface (11a, 11b),
the top surface (11c) being substantially parallel with a floor portion (201) of said vehicle, wherein, at said installed state, said sealed chamber is defined by at least said first and second side surface (11a, 11b), said top surface (11c) and a bottom surface connected to lower edges of said first and second side surface (11a, 11b),
preferably, said bottom surface (11d) is a part of said floor portion (201) of said vehicle (200).
